# FASCICULE DE BREVET EUROPEEN

(11) **EP 1 655 214 B1**
(45) Date de publication et mention de la délivrance du brevet: **15.04.2009**
(21) Numéro de dépôt: 05292237.4
(22) Date de dépôt: 24.10.2005
(51) Int. Cl.: B62H 5/00, B62H 5/14

(54) **Dispositif antivol à câble pour un cycle et cycle equipé d'un tel dispositif**
Antidiebstahlvorrichtung für ein Fahrrad und ein Fahrrad mit solcher Vorrichtung
Anti-theft device for cycle and cycle equipped with such device.

(30) Priorité: 09.11.2004 FR 0411927
(43) Date de publication de la demande: 10.05.2006
(73) Titulaire: JCDecaux SA, 92200 Neuilly-Sur-Seine (FR)
(72) Inventeur: Gagosz, Jean-Claude, 28140 BU (FR)
(74) Mandataire: Bérogin, Francis

(56) Documents cités:
- DE-U1- 29 624 281
- FR-A- 2 837 781
- US-A- 3 950 972
- US-A- 4 028 916
- US-A- 4 086 795
- US-A- 4 099 394
- US-A- 4 776 188

## Description

L'invention a trait aux cycles, et plus particulièrement aux dispositifs antivol pour cycles comprenant :
- un verrou,
- un câble ayant une première extrémité fixée à demeure sur le châssis et une seconde extrémité mobile apte à coopérer avec le verrou, et
- une platine montée sur une fourche pivotante par rapport au châssis, portant une roue avant et sur laquelle peut venir s'accrocher l'extrémité mobile du câble.

On connaît de nombreux dispositifs antivol destinés aux cycles (et notamment aux bicyclettes), le document US-A-4 099 394 refléte l'état de la technique. A titre d'exemple, citons l'antivol à câble, au moyen duquel on forme une boucle fermée qui attache, soit le cycle dans son ensemble à un élément de mobilier urbain (tel qu'un poteau ou un arbre), soit l'une des roues du cycle à son châssis afin d'en empêcher la libre rotation. Citons également les verrous en U, qui comportent une partie mâle sous la forme d'une tige rigide courbée que l'on enfile sur les rayons de l'une des roues du cycle, et une partie femelle que l'on vient encliqueter à l'extrémité de la partie mâle pour empêcher son retrait de la roue.

L'efficacité de ces dispositifs antivol n'est pas contestée. Mais ils présentent pour principal inconvénient d'être encombrants et peuvent s'avérer d'un usage fastidieux. En particulier, compte tenu des diverses positions que peut adopter un cycle, et de la configuration du mobilier urbain sur laquelle celui-ci doit être attaché, il est parfois malaisé de raccorder les deux extrémités d'un antivol à câble, ou d'encliqueter la partie femelle d'un verrou en U à la partie mâle.

On connaît aussi des dispositifs antivol pour cycles comprenant un câble flexible pouvant être stocké sur une bobine articulée sur le cadre lorsqu'il n'est pas utilisé. Le cable présente une première extrémité raccordée à la bobine et une extrémité libre qui peut être insérée dans un organe en vue de son verrouillage. Un cadenas permet de verrouiller l'extrémité libre audit un organe.

Touefois, l'utilisateur doit se munir d'un cadenas pour pouvoir verrouiller le dispositif antivol.

L'invention vise notamment à remédier à ces inconvénients, en proposant un dispositif antivol présentant une commodité d'utilisation accrue.

A cet effet, l'invention propose cycle muni d'un châssis avec un dispositif antivol dans lequel le verrou est monté à demeure sur le châssis en étant mobile entre une position de verrouillage, dans laquelle il bloque la seconde extrémité du câble par rapport à la platine, et une position de déverrouillage, dans laquelle il libère cette seconde extrémité par rapport au châssis.

De la sorte, il n'est pas nécessaire pour l'utilisateur de se munir d'un dispositif antivol séparé, celui-ci étant intégré au cycle. Il en résulte une commodité d'utilisation accrue. En particulier, il n'est pas nécessaire de faire coopérer les extrémités du câble, ce qui réduit le temps de mise en place de l'antivol.

D'autres objets et avantages de l'invention apparaîtront à la lumière de la description faite ci-après en référence aux dessins annexés dans lesquels :
- la figure 1 est une vue en perspective partielle d'une bicyclette équipée d'un dispositif antivol selon l'invention ;
- les figures 2 à 5 sont des vues en perspective partielle montrant la bicyclette de la figure 1, suivant un autre angle de vue, et illustrant le mode opératoire de mise en place de l'antivol.

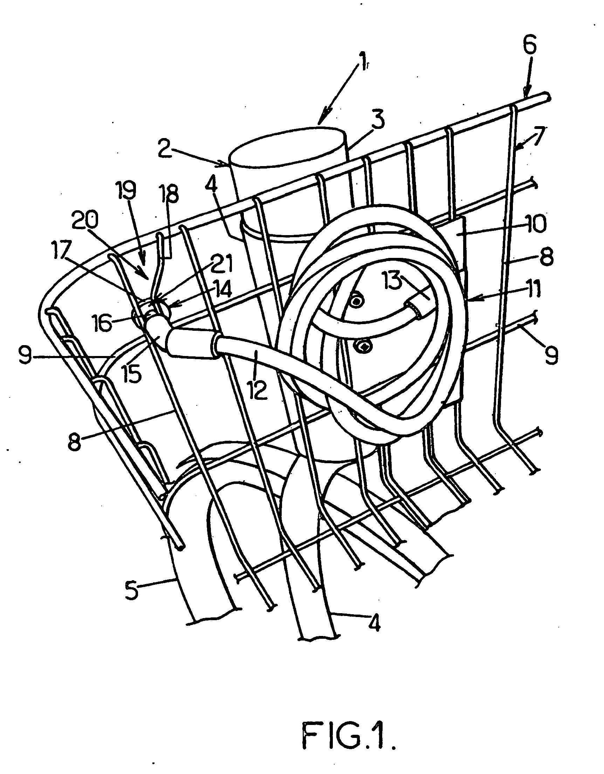

Sur la figure 1 est représentée une bicyclette 1 comportant un châssis 2 composé d'un cadre 3 fabriqué à partir de tubes soudés ou brasés. Le châssis 2 comporte en particulier une fourche 4 portant à rotation une roue avant 5 de la bicyclette 1, cette fourche 4 étant montée pivotante sur le cadre 3, comme cela est représenté sur l'ensemble des figures.

Comme cela est visible sur la figure 1, le châssis 2 comprend en outre un porte-bagages 6 fixé à demeure sur la fourche 4. Ce porte-bagages se présente sous la forme d'un panier fabriqué dans un treillis 7 de fils d'acier verticaux 8 et horizontaux 9 ; il est fixé à la fourche 4 au moyen d'une plaque 10 métallique rapportée qui, chevauchant plusieurs fils 8, 9 du treillis 7, est vissée dans la fourche 4.

La bicyclette 1 est équipée d'un dispositif antivol 11 intégré, qui comporte un câble 12 ayant une première extrémité 13 fixée à demeure sur le châssis 2, et une seconde extrémité 14 mobile, conformée en crochet.

Plus précisément, l'extrémité fixe 13 du câble 12 est fixée à demeure au porte-bagages 6, par exemple en étant soudée ou vissée à la plaque 10 de fixation de celui-ci à la fourche 4, comme cela est représenté sur la figure 1.

Quant à l'extrémité mobile 14 du câble 12, elle comporte pour former crochet un arbre 15 cylindrique prolongé par une tige 16 d'un diamètre inférieur à l'arbre 15, cette tige 16 étant à son tour prolongée par une pastille 17 d'un diamètre supérieur à celui de la tige 16.

Le porte-bagages 6 est muni d'un fil 18 supplémentaire coudé, définissant, avec l'un des fils verticaux 8 du treillis 7, un logement 19 sensiblement complémentaire du crochet 14, et dans lequel celui-ci est introduit lorsque le câble 12 est inutilisé, comme cela est représenté sur la figure 1.

Ce logement 19 présente une partie supérieure 20, au niveau de laquelle l'écartement entre le fil supplémentaire 18 et le fil 8 du treillis 7 est suffisant pour permettre l'introduction et le retrait du crochet 14, ainsi qu'une partie inférieure 21 au niveau de laquelle l'écartement entre le fil supplémentaire 18 et le fil 8 du treillis 7 est inférieur au diamètre de l'arbre 15 et à celui de la pastille 17, de sorte que le crochet 14, reposant sur un fil horizontal 9, s'y trouve maintenu, sauf à le soulever pour le placer au droit de la partie supérieure 20, ce qui autorise son retrait.

Le dispositif antivol 11 comporte en outre un verrou 22, monté sur le châssis 2 et avec lequel l'extrémité mobile 14 du câble 12 est apte à coopérer, ce verrou 22 étant mobile entre :
- une position de verrouillage dans laquelle il bloque la seconde extrémité 14 du câble 12 par rapport au châssis 2, et
- une position de déverrouillage dans laquelle il libère cette seconde extrémité 14 par rapport au châssis 2.

Plus précisément, ce verrou 22 se présente sous la forme d'un levier pivotant, monté articulé sur un support 23 fixé sur le cadre 3 au voisinage de la fourche 4.

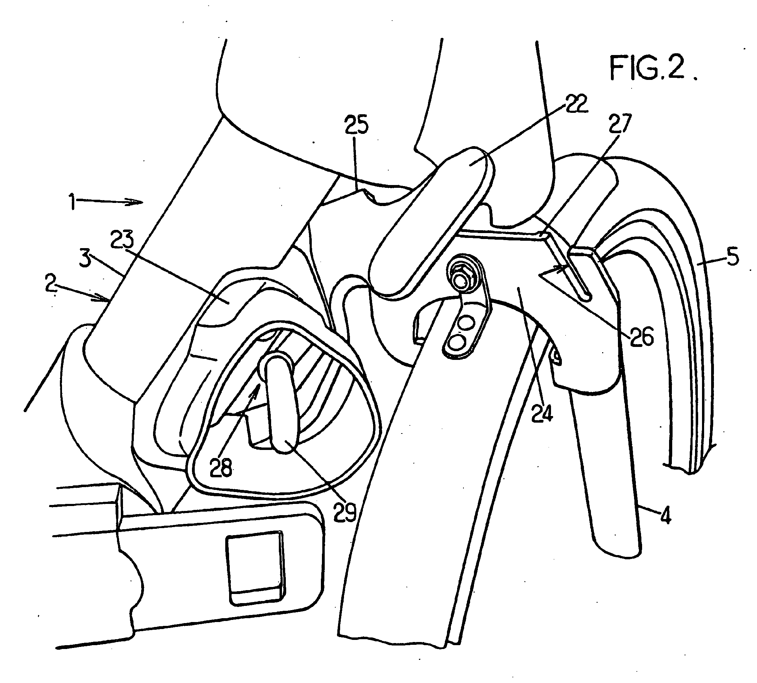

Une platine 24 est montée sur la fourche 4, cette platine 24 se présentant sous la forme d'une plaque métallique disposée dans le plan de la fourche 4, c'est-à-dire dans un plan contenant l'axe de la roue avant 5 et les tubes qui, formant la fourche 4, sont disposés de part et d'autre de la roue 5 (figure 2).

Dans sa position de déverrouillage, le verrou 22 occupe une position haute dans laquelle il est plaqué contre le cadre 3, et permet la libre rotation de la fourche 4 par rapport à celui-ci.

Dans sa position de verrouillage, il occupe au contraire une position basse dans laquelle l'un de ses bords, dit bord avant 25, se trouve en regard de la platine 24, après que la roue 5 a été tournée par rapport au cadre 3 d'un angle non nul.

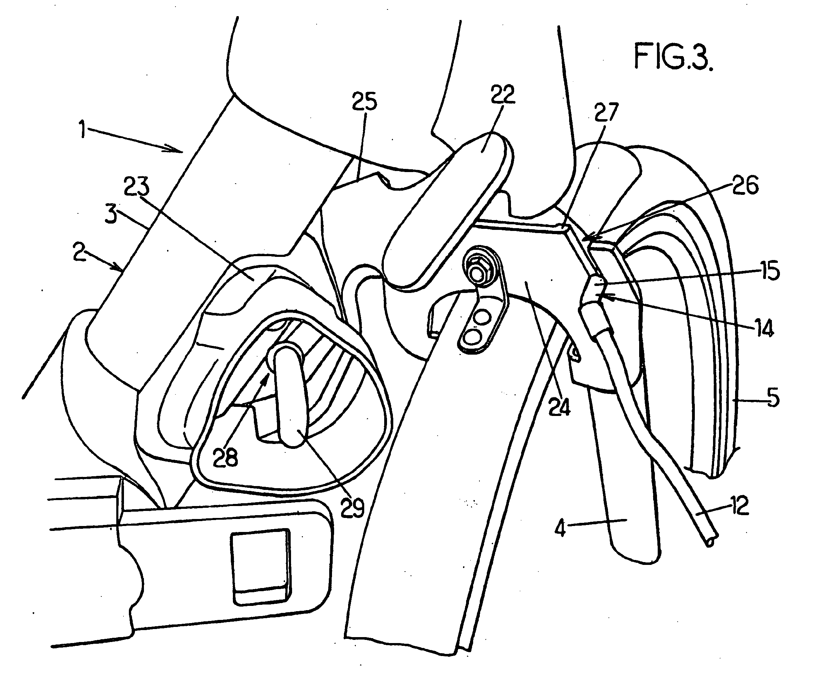

Comme cela est visible sur les figures 2 et 3 notamment, la platine 24 comprend une rainure 26 débouchant sur un bord supérieur 27 de la platine 24, cette rainure 26 étant d'une largeur légèrement supérieure au diamètre de la tige 16 du crochet 14, la platine 24 présentant par ailleurs une épaisseur légèrement inférieure à la longueur de cette tige 16.

De la sorte, il est possible d'insérer le crochet 14 dans la rainure 26, comme cela est montré sur la figure 3, le crochet 14, maintenu de part et d'autre de la platine 24 par l'arbre 15 d'une part et la pastille 17 d'autre part, ne pouvant être retiré de la rainure 26 que par coulissement le long de la celle-ci.

En partant d'une configuration dans laquelle le verrou 22 se trouve dans sa position de déverrouillage, et dans laquelle la roue avant 5 est tournée d'un angle non nul par rapport au cadre 3, angle suffisant pour permettre le libre pivotement du verrou 22 sans que celui-ci vienne buter contre la platine 24 (figure 2), la mise en place de l'antivol est réalisée comme suit. Dans cette configuration, le verrou 22 se trouve à distance de la platine 24 (et donc de la rainure).

Après avoir fait usage du câble 12 de la manière classique (par exemple en entourant un élément de mobilier urbain tel qu'un poteau), on commence par introduire le crochet 14 dans la rainure 26 (figure 3).

Puis on abaisse le verrou 22 vers sa position de verrouillage. Dans cette position, le verrou 22 est alors adjacent à la rainure 26, son bord avant 25 étant sensiblement perpendiculaire à celle-ci. Le crochet 14 se trouve alors bloqué par rapport à la platine 24, sauf à relever le verrou 22 dans sa position de déverrouillage pour permettre le retrait du crochet 14.

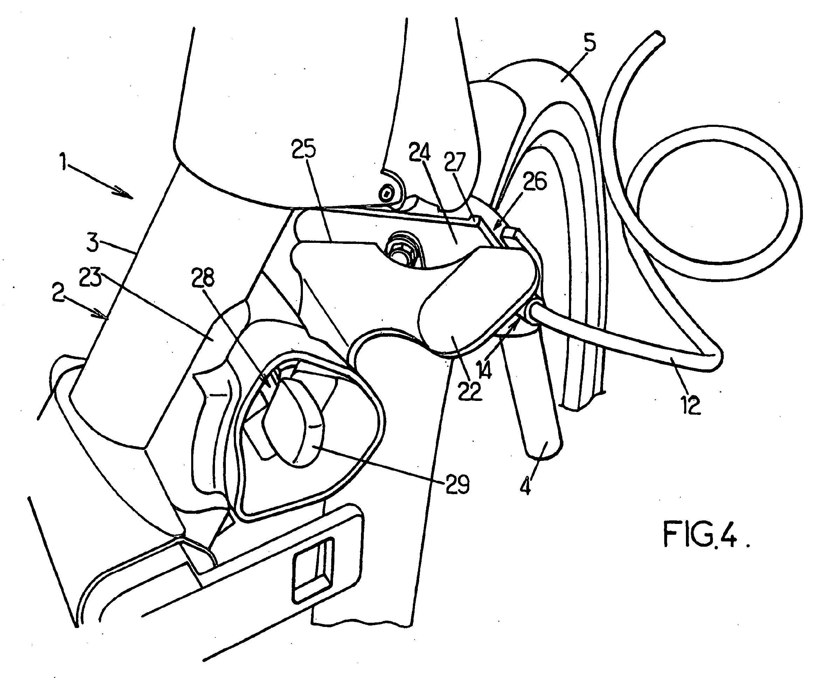

Comme cela est représenté sur les figures 2 à 5, le support 23 est équipé d'une serrure 28 à clé 29, apte à adopter, par manoeuvre de la clé 29 :
- une position fermée (représentée sur la figure 4) dans laquelle le verrou 22 est maintenu dans sa position de verrouillage, et
- une position ouverte (figure 3) permettant le passage du verrou 22 de sa position de verrouillage à sa position de déverrouillage, et réciproquement.

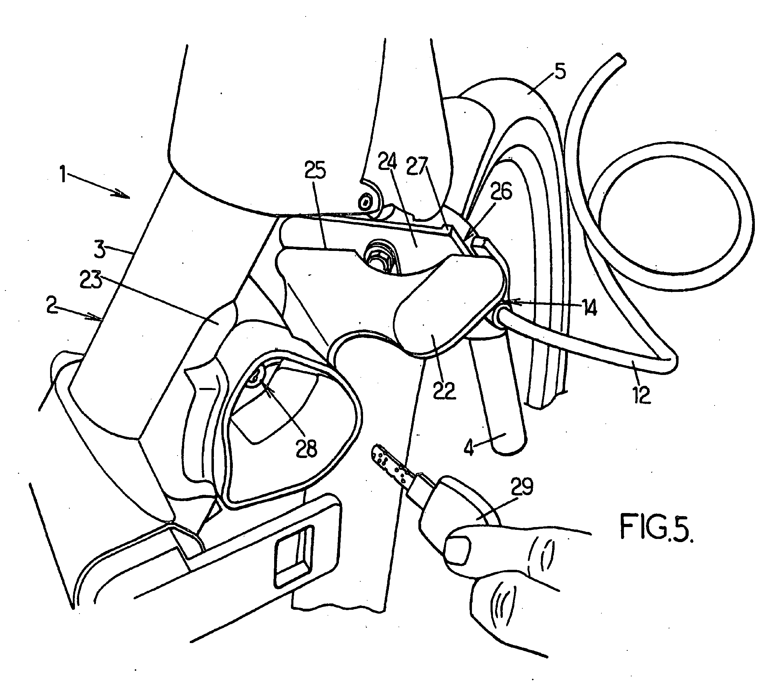

Ainsi, le retrait de la clé 29 de la serrure 28 (comme illustré sur la figure 5) bloque le verrou 22 dans sa position de verrouillage, et assure ainsi le maintien du crochet 14 sur la platine 24. La bicyclette 1 se trouve ainsi accrochée au mobilier urbain choisi par l'utilisateur, seul autorisé à l'en décrocher par manoeuvre de la clé 29 dans la serrure 28.

Il est ainsi possible d'assurer la mise en place de l'antivol par simple manoeuvre de l'extrémité libre 14 du câble 12. Celui-ci étant fixé, par son extrémité opposée 13, au châssis 2 (en l'occurrence au porte-bagages 6), il n'est pas nécessaire de se munir d'un dispositif antivol séparé.

Un tel dispositif antivol 11 est particulièrement adapté aux bicyclettes de location, leurs utilisateurs ne pensant en effet que rarement à emporter avec eux un dispositif antivol.

Les dispositions qui assurent d'une part le verrouillage du câble 12 et d'autre part le blocage de la roue avant 5 dans une position tournée par rapport au cadre 3 sont complémentaires : l'éventuelle section du câble 12 au moyen d'un objet tranchant ne libère pas totalement la bicyclette 1, sa roue avant 5 se trouvant dans une position empêchant le roulage en ligne droite.

Il va de soi que, bien que particulièrement adapté aux bicyclettes, le dispositif antivol qui vient d'être décrit peut équiper tout type de cycles, tels que motos, scooters, mobylettes.

## Revendications

1. Cycle (1) muni d'un châssis (2) avec un dispositif antivol (11), le dispositif antivol (11) comprenant :
- un verrou (22),
- un câble (12) ayant une première extrémité (13) fixée à demeure sur le châssis (2), et une seconde extrémité (14) mobile, apte à coopérer avec le verrou (22), et
- une platine (24) montée sur une fourche (4) pivotante par rapport au châssis portant une roue avant (5) et sur laquelle peut venir s'accrocher l'extrémité mobile (14) du câble (12),
**caractérisé en ce que** le verrou (22) est monté à demeure sur le châssis (2), en étant mobile entre une position de verrouillage, dans laquelle il bloque la seconde extrémité (14) du câble (12) par rapport à la platine (24), et une position de déverrouillage, dans laquelle il libère cette seconde extrémité (14) par rapport au châssis (2).

2. Cycle (1) selon la revendication 1, dans lequel la seconde extrémité (14) du câble (12) est conformée en crochet, et dans lequel la platine (24) comprend une rainure (26) dans laquelle le crochet (14) est apte à être inséré.

3. Cycle (1) selon la revendication 2, dans lequel, dans sa position de déverrouillage le verrou (22) se trouve à distance de la rainure (26), tandis que, dans sa position de verrouillage, il est adjacent à celle-ci.

4. Cycle (1) selon l'une des revendications 1 à 3, dans lequel le verrou (22) ne peut occuper sa position de verrouillage que lorsque la roue avant (5) forme avec le cadre (3) un angle non nul.

5. Cycle (1) selon l'une des revendications 1 à 4, qui comporte une serrure (28) à clé (29) montée sur le châssis (2) du cycle (1), cette serrure (28) étant apte à adopter par manoeuvre de la clé (29) une position fermée dans laquelle le verrou (22) est maintenu dans sa position de verrouillage, et une position ouverte permettant le passage du verrou (22) de sa position de verrouillage à sa position de déverrouillage, et réciproquement.

## Claims

1. Cycle (1) provided with a frame (2) and an anti-theft device (11), said anti-theft device (11) comprising:
- a bolt (22),
- a cable (12) having a first end (13) permanently fixed to the frame (2) and a mobile second end (14) capable of cooperating with the bolt (22), and
- a plate (24) fitted to a fork (4) rotatable with respect to the frame (2) carrying a front wheel (5) and on which the mobile end (14) of the cable (12) is capable of cooperating,
**characterized in that** this bolt (22) is permanently mounted on the frame (2) in being movable between a locking position in which it locks the second end (14) of the cable (12) with respect to the plate (24), and an unlocking position in which it releases this second end (14) with respect to the frame (2).

2. Cycle according to Claim 1, in which the second end (14) of the cable (12) is shaped as a hook, and in which the plate (24) comprises a slot (26) into which the hook (14) is able to be inserted.

3. Cycle according to Claim 2, in which in its unlocking position, the bolt (22) is at a distance from the slot (26), whereas in its locking position it is adjacent to the latter.

4. Cycle according to anyone of the Claims 1 to 3, in which the bolt (22) can occupy its locking position only when the front wheel is forming a non-zero angle with the framework (3).

5. Cycle according to anyone of the Claims 1 to 4, which comprises a key-operated lock (28) mounted on the frame (2) of the cycle (1), this lock (28) being able to assume, when the key (29) is operated, a closed position in which the bolt (22) is held in its locking position, and an open position allowing the passage of the bolt (22) from its locking position to its unlocking position, and vice versa.

## Patentansprüche

1. Fahrrad (1), ausgestattet mit einem Fahrgestell (2) mit einer Antidiebstahlvorrichtung (11), wobei die Antidiebstahlvorrichtung aufweist:
- einen Riegel (22),
- ein Kabel (12) mit einem dauerhaft an dem Fahrgestell (2) angebrachten ersten Ende (13) und einem beweglichen zweiten Ende (14), das mit dem Riegel (22) zusammenwirken kann, und
- eine Platte (24), welche an einer bezüglich des Rahmens drehbaren Gabel (4), die ein Vorderrad (5) hält, angebracht ist und an welcher sich das bewegliche Ende (14) des Kabels (12) befestigen läßt,
**dadurch gekennzeichnet, daß** der Riegel (22) dauerhaft an dem Fahrgestell (2) angebracht ist, wobei er sich zwischen einer Verriegelungsposition, in welcher er das zweite Ende (14) des Kabels (12) bezüglich der Platte (24) verriegelt, und einer Entriegelungsposition, in welcher er dieses zweite Ende (14) bezüglich des Fahrgestells (2) freigibt, bewegen läßt.

2. Fahrrad (1) nach Anspruch 1, in welchem das zweite Ende (14) des Kabels (12) in Form eines Hakens ist und in welchem die Platte (24) eine Einkerbung (26) aufweist, in welche der Haken (14) eingesetzt werden kann.

3. Fahrrad (1) nach Anspruch 2, in welchem sich der Riegel (22) in seiner Entriegelungsposition in einem Abstand zu der Einkerbung (26) befindet, während er in seiner Verriegelungsposition an diese angrenzt.

4. Fahrrad (1) nach einem der Ansprüche 1 bis 3, in welchem der Riegel (22) seine Vertriegelungsposition nur dann einnehmen kann, wenn das Vorderrad (5) mit dem Rahmen (3) einen Winkel von ungleich Null bildet.

5. Fahrrad (1) nach einem der Ansprüche 1 bis 4, das ein an dem Fahrgestell (2) des Fahrrads (1) angebrachtes, mit einem Schlüssel zu bedienendes Schloß (28) aufweist, wobei das durch den Schlüssel (29) betätigbare Schloß (28) eine geschlossene Position einnehmen kann, in welcher der Riegel (22) in seiner Verriegelungsposition gehalten wird, und eine geöffnete Position einnehmen kann, die einen Übergang des Riegels (22) von seiner Verriegelungsposition in seine Entriegelungsposition und umgekehrt erlaubt.
